# EUROPÄISCHE PATENTANMELDUNG

(11) **EP 1 944 149 A2**
(43) Veröffentlichungstag der Anmeldung: **16.07.2008**
(21) Anmeldenummer: 08100372.5
(22) Anmeldetag: 11.01.2008
(51) Int. Cl.: B29C 49/06, B29L 16/00

(54) **Spritzgussteil mit einer Faltenkontur und Verfahren zur Herstellung des Spritzgussteils**

(30) Priorität: 12.01.2007 DE 102007002600
(71) Anmelder: MANN+HUMMEL GmbH, 71638 Ludwigsburg (DE)
(72) Erfinder: Regener, Guido, 38321 Klein Denkte (DE); Wolf, Stephan, 38667 Bad Harzburg (DE); Danneberg, Horst, 37441 Bad Sachsa (DE)

(57) **Zusammenfassung**

Die vorliegende Erfindung betrifft ein Verfahren zum Herstellen eines Spritzgussteils bestehend aus wenigstens zwei Abschnitten (12,14), wobei ein Abschnitt (14) eine Faltenkontur (24) aufweist. Gemäß dem Verfahren wird ein spritzgegossener Vorformling (10) bereitgestellt, wobei der Vorformling (10) wenigstens eine Öffnung (34) aufweist. Der Abschnitt (14) des Vorformlings (10) der mit der Faltenkontur (24) zu versehen ist, wird in eine Blasform (26) eingesetzt. Die Blasform weist dabei auf ihrer Innenseite eine der Faltenkontur entsprechende Negativkontur (30) auf. Eine Heiz- und Blaseinrichtung (32) wird durch die Öffnung in den Vorformling (10) eingeführt, wobei die Öffnung verschlossen wird. Zumindest der Abschnitt (14) des Vorformlings (10), der mit der Faltenkontur (24) zu versehen ist, wird durch die Heiz- und Blaseinrichtung (32) erwärmt und aufgeblasen, um den Abschnitts auf die Negativkontur (30) der Blasform (26) aufzubringen. Nachdem das Spritzgussteil abgekühlt ist wird es aus der Blasform (26) entfernt.

## Beschreibung

Die vorliegende Erfindung bezieht sich auf ein Spritzgussteil mit einer Faltenkontur, beispielsweise Luftführungsteile, sowie auf ein Verfahren zur Herstellung desselben.

### Technischer Hintergrund der Erfindung

Allgemein sind Luftführungsteile bekannt, beispielsweise Reinluftrohre, die mit einer Faltenkontur ausgebildet sind. Die Faltenkontur dient dazu, dass das Luftführungsteil besser gebogen werden kann, um beim Einbau an unterschiedliche bauliche Gegebenheiten angepasst zu werden. Neben dem Faltenbereich können die Luftführungsteile beispielsweise mit komplexeren Elementen, wie einer Filteraufnahme oder Anschlusselementen, versehen sein.

Zur Herstellung eines solchen Luftführungsteils bzw. dessen Faltenbereichs wird zunächst ein Kunststoffschlauch durch Extrudieren hergestellt. Der erwärmte, noch flexible Schlauch wird anschließend in eine Blasform eingebracht. Die Blasform weist auf der Innenseite eine entsprechende Negativkontur der gewünschten Faltenkontur auf. Der noch erwärmte Schlauch wird mittels Innendruck gegen die Faltenkontur der Blasform aufgebracht und nach seinem Erkalten aus der Form entfernt.

Dieses Verfahren hat jedoch den Nachteil, dass der extrudierte Kunststoffschlauch sofort in eine Blasform eingeführt und dort aufgeblasen werden muss, bevor er sich zu stark abkühlt und sich nicht mehr geeignet umformen lässt bzw. erst wieder erwärmt werden muss. Ein weiterer Nachteil ist, dass solche Luftführungsteile gewöhnlich aus mehreren Teilen, d.h. beispielsweise dem Faltenbereich und der Filteraufnahme, hergestellt werden, wobei die einzelnen Teile anschließend miteinander in verschiedenen Arbeitsschritten verbunden werden müssen.

Aus dem Stand der Technik, wie er beispielsweise in der DE 31 24 523 C2 offenbart ist, ist des Weiteren eine Vorrichtung zum Herstellen hohler Kunststoffartikel, wie Flaschen oder anderer Behältnisse bekannt. Dabei wird ein einstufiges Herstellungsverfahren verwendet Hierbei wird über einen Extruder zunächst plastiziertes bzw. erweichtes Material einer Spritzgießvorrichtung zugeführt. In der Spritzgießvorrichtung wird ein Vorformling erzeugt. Dieser wird anschließend über ein Überführungsgerät schnell aus der Spritzgießform entfernt und zu einer Ladestation einer Streck-Blasvorrichtung transportiert und dort eingelegt. In der Streck-Blasvorrichtung wird der Vorformling einer Temperaturkonditionierung unterzogen. Anschließend wird der Vorformling gestreckt bzw. gedehnt und zu einem fertigen Kunststoffartikel geblasen.

Das einstufige Verfahren hat, wie zuvor bereits beschrieben, den Nachteil, dass der erzeugte Vorformling sofort weiter verarbeitet werden muss. Ein weiterer Nachteil ist, dass durch das Blasumformen selbst keine komplexen Geometrien hergestellt werden können. Des Weiteren sind die Konturen, die durch das Blasumformen erzeugt werden, weniger scharf ausgebildet als wenn das Teil, beispielsweise durch Spritzgießen, hergestellt wird.

Aus der DE 10 2004 044 260 A1 ist weiter ein Verfahren zur Blasumformung von Behältern bekannt, bei der ein Vorformling nach einer thermischen Konditionierung innerhalb einer Blasform von einer Reckstange gereckt und durch Blasdruckeinwirkung in den Behälter umgeformt wird. Dabei kann die Herstellung einstufig oder in zwei Stufen erfolgen. Bei dem zweistufigen Verfahren wird zunächst ein Vorformling hergestellt. Dieser wird zwischengelagert bevor er später zu einem Behälter aufgeblasen wird.

Da solche Behälter normalerweise eine einfache Struktur aufweisen, ist das Herstellen dieser Behälter mittels Blasformen ausreichend. Für komplexere Strukturen ist ein solches Herstellungsverfahren jedoch nicht geeignet.

Es besteht daher ein Bedarf, ein Spritzgussteil mit einem Faltenkontur und ein Verfahren zur Herstellung des Spritzgussteils bereitzustellen, bei dem das Spritzgussteil nicht aus mehreren Teilen zusammengesetzt werden muss und neben der Faltenkontur auch komplexere Strukturen aufweisen kann.

### Aufgabenstellung

Vor diesem Hintergrund liegt der vorliegenden Erfindung die Aufgabe zugrunde, ein Spritzgussteil mit einer Faltenkontur und ein Verfahren zur Herstellung des Spritzgussteils bereitzustellen, bei dem das Spritzgussteil in wenigen Arbeitsschritten aus einem Stück gefertigt werden kann.

### Zusammenfassung und Vorteile der Erfindung

Erfindungsgemäß wird die oben genannte Aufgabe durch ein Verfahren mit den Merkmalen des Anspruchs 1 und einer Vorrichtung mit den Merkmalen des Anspruchs 7 gelöst.

### Demgemäß ist vorgesehen:

Ein Verfahren zum Herstellen eines Spritzgussteils bestehend aus wenigstens zwei Abschnitten, wobei ein Abschnitt eine Faltenkontur aufweist, mit den folgenden Schritten: Bereitstellen eines spritzgegossenen Vorformlings, wobei der Vorformling wenigstens eine Öffnung aufweist; Einsetzen des Abschnitts des Vorformlings, der mit der Faltenkontur zu versehen ist, in eine Blasform, wobei die Blasform auf ihrer Innenseite eine der Faltenkontur entsprechende Negativkontur aufweist; Einführen einer Heiz- und Blaseinrichtung durch die Öffnung in den Vorformling, wobei die Öffnung verschlossen wird; Erwärmen und Aufblasen zumindest des Abschnitts des Vorformlings, der mit der Faltenkontur zu versehen ist, durch die Heiz- und Blaseinrichtung, um den Abschnitts des Vorformlings auf die Negativkontur der Blasform aufzubringen; Entfernen des Spritzgussteils aus der Blasform nachdem dieses abgekühlt ist.

Ferner ist ein Spritzgussteil vorgesehen, das nach dem zuvor beschriebenen Verfahren hergestellt ist.

Die der vorliegenden Erfindung zugrunde liegende Idee besteht darin, ein Verfahren bereitzustellen, dass die Herstellung von Bauteilen erlaubt, die einerseits einen durch Blasformen hergestellten Faltenabschnitt und andererseits einen spritzgegossenen Abschnitt aufweisen. Dies wird erreicht, indem ein Vorformling spritzgegossen wird, wobei ein Abschnitt des Vorformlings bereits seine spätere, fertige Form aufweist, während der andere Abschnitt in einem weiteren Schritt durch Blasformen mit einer Faltenkontur versehen wird.

Auf diese Weise ist es möglich beispielsweise Luftführungsteile, wie Reinluftrohre, in wenigen Fertigungsschritten herzustellen, die zuvor aus mehreren Komponenten in verschiedenen Arbeitsschritten zusammengefügt werden mussten. Dabei kann beispielsweise der bereits fertige, spritzgegossene Abschnitt des Vorformlings als Filteraufnahme ausgebildet sein, während der andere spritzgegossene Abschnitt des Vorformlings noch weiter mittels Blasformen umgeformt wird, um die gewünschte Faltenkontur zu erzeugen.

Hierdurch können Herstellungskosten gesenkt werden. Des Weiteren kann die Qualität solcher Teile verbessert werden, da der fertige, spritzgegossene Abschnitt eine höhere Genauigkeit aufweist, als wenn er mittels Blasformen hergestellt wird.

Vorteilhafte Ausgestaltungen und Weiterbildungen der Erfindung ergeben sich aus den weiteren Unteransprüchen, sowie aus der Beschreibung in Zusammenschau mit den Zeichnungen.

In einer vorteilhaften Ausgestaltung sind der erste und zweite Abschnitt des Vorformlings aus einem unterschiedlichen Material hergestellt. Dies hat den Vorteil, dass das Material an die jeweilige Funktion des entsprechenden Abschnitts angepasst werden kann.

In einer weiteren vorteilhaften Ausgestaltung wird zum Erwärmen und Aufblasen des Vorformlings vorzugsweise Heißluft verwendet. Dadurch kann dem Vorformling zum Einen Wärme zugeführt werden und der Vorformling gleichzeitig aufgeblasen werden.

Gemäß einer anderen vorteilhaften Ausgestaltung weist zumindest die Negativkontur der Blasform eine Antihaftbeschichtung auf. Die Antihaftbeschichtung hat den Vorteil, dass das Entfernen des fertigen Spritzgussteils aus der Blasform erleichtert wird.

### Inhaltsangabe der Zeichnung

Die Erfindung wird nachfolgend anhand des in den Figuren der Zeichnung angegebenen Ausführungsbeispiels näher erläutert. Dabei zeigt:
- Fig. 1: eine perspektivische Ansicht des Vorformlings gemäß der Erfindung,
- Fig. 2: eine Querschnittansicht des Vorformlings und eine Blasform, wobei der Vorformling in die geöffnete Blasform eingeführt wird,
- Fig. 3: die Ansicht gemäß Fig. 2, wobei der Vorformling in die Blasform eingesetzt ist,
- Fig. 4: die Ansicht gemäß Fig. 3, wobei ein Abschnitt des Vorformlings mit Wärme beaufschlagt wird,
- Fig. 5: eine perspektivische Ansicht des fertigen Spritzgussteils.

### Beschreibung eines Ausführungsbeispiels der Erfindung

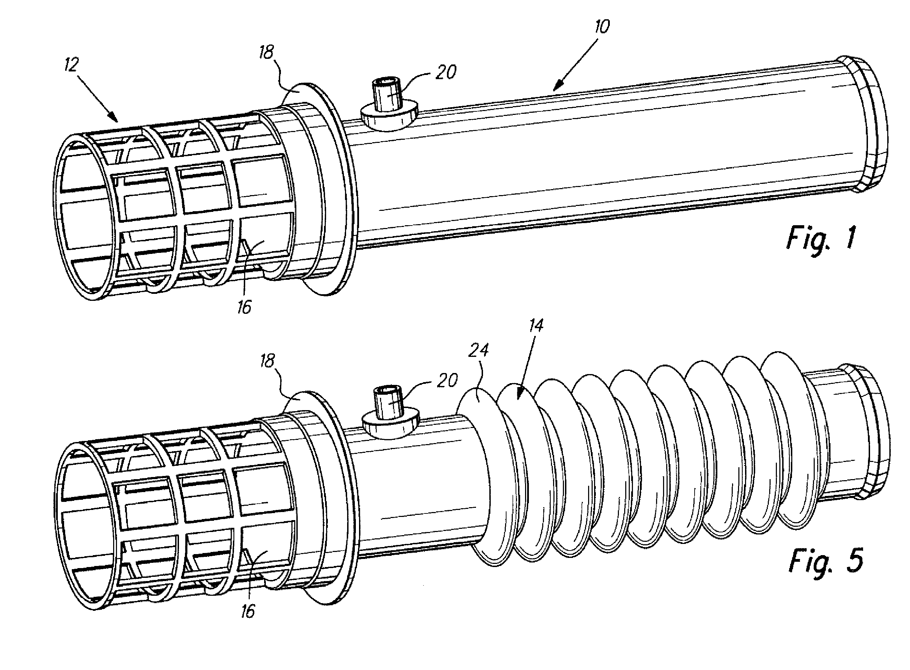

Fig. 1 zeigt eine perspektivische Ansicht eines Vorformlings 10 gemäß der Erfindung. Der Vorformling 10, wie er in Fig. 1 dargestellt ist, wird in Form eines rohrförmigen Spritzgussteils hergestellt. Dabei weist der Vorformling 10 zwei Abschnitte 12, 14 auf. Ein erster Abschnitt 12 ist als Spritzgussteil bereits fertig ausgebildet. Dieser Abschnitt 12 bildet hierbei einen rohrförmigen Abschnitt mit Öffnungen 16, einem Flansch 18 und einem Anschlusselement 20. In den rohrförmigen Abschnitt kann später beispielsweise ein Filter eingelegt werden.

Der zweite Abschnitt 14 des Vorformlings bildet ebenfalls einen rohrförmigen Abschnitt 22 mit zunächst einer glatten Wandung. An diesem Abschnitt 14 wird gemäß der Erfindung eine Faltenkontur 24 ausgebildet. Solche Faltenkonturen 24 dienen beispielsweise dazu, um ein Biegen des fertigen Teils in diesem Bereich zu ermöglichen bzw. zu erleichtern. Die beiden Abschnitte 12, 14 können dabei aus demselben Material oder unterschiedlichen Materialien bestehen. Als Materialien können beispielsweise Kunststoffe wie PET, PEN oder PP verwendet werden, um nur einige Beispiele von vielen zu nennen. Abhängig von der Funktion bzw. dem Einsatzzweck des Spritzgussteils können auch beispielsweise glasfaserverstärkte Kunststoffe verwendet werden.

Zum Ausbilden der Faltenform auf dem zweiten Abschnitt 14 des Vorformlings 10 wird eine Blasform 26 bereitgestellt. Die Blasform 26 besteht aus zwei Formhälften 28, die auf ihrer Innenseite jeweils eine der gewünschten Faltenkontur entsprechende Negativkontur 30 aufweisen. Die Formhälften 28 weisen dabei vorzugsweise eine Antihaftbeschichtung auf der Innenseite auf, die ein Lösen des Spritzgussteils nach dem Blasformen erleichtert.

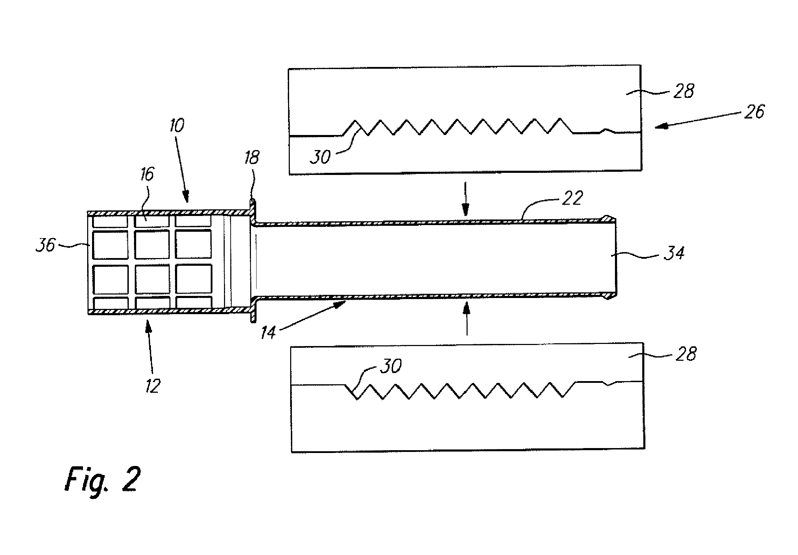

In einem ersten Schritt, wie in Fig. 2 gezeigt ist, wird der Vorformling 10 mit dem zweiten Abschnitt 14 in die Blasform 26 eingeführt und die Blasform 26 geschlossen.

In einem zweiten Schritt wird anschließend eine Heiz- und Blaseinrichtung 32 in den umzuformenden Bereich des Vorformlings 10 eingeführt und die beiden offenen Enden 34, 36 des Vorformlings 10 verschlossen. Wie in Fig. 2 gezeigt ist, kann das eine Ende des Vorformlings 10 dabei direkt über die Heiz- und Blaseinrichtung 32 oder einen damit verbundenen Verschlussstopfen 38 verschlossen werden. Das andere offene Ende 36 wird mit einem Verschlussstopfen 40 verschlossen. Die später eingeführte Luft kann daher nicht ungewollt über diese Öffnungen 34, 36 entweichen. Wahlweise kann jedoch wenigstens ein Ventil (nicht dargestellt) vorgesehen werden, beispielsweise an dem Verschlusselement oder der Blasform, über das Luft kontrolliert abgeführt werden kann. Der durch die Heiz- und Blaseinrichtung 32 aufgebaute Innendruck zum Aufbringen des erwärmten Abschnitts an die Faltenkontur 30 ist bei Spritzgussteilen, wie dem Luftleiter wie er in Fig. 5 dargestellt ist, höher, da das Teil insgesamt massiver ausgebildet ist als beispielsweise Flaschen oder Tuben, die gemäß dem Stand der Technik ebenfalls durch Blasformen hergestellt werden können.

In einem nächsten Schritt wird der umzuformende Abschnitt über die Heiz- und Blaseinrichtung 32 zunächst erwärmt. Dabei wird der umzuformende Abschnitt 14 zunächst plastifiziert. Nach der Plastifizierung wird ein geeigneter Blasdruck bzw. geeignete Blasdrücke aufgebaut, der bzw. die bewirken, dass sich das Material des Vorformlings 10 an die Faltenkontur 30 der Blasform 26 anlegt. Das Material des Vorformlings 10 wird dabei gedehnt, so dass es sich an die Faltenkontur 30 anpassen kann. Bei einem glasfaserverstärkten Kunststoff werden dabei die Glasfasern gedehnt.

Das Spritzgussteil kann dabei durch die kalte Oberfläche der Formhälften 28 abkühlen. Grundsätzlich ist aber auch denkbar, die Formhälften 28 mit einer Kühleinrichtung zu versehen oder das fertige Sprüzgusstell in einer separaten Kühleinrichtung geeignet abzukühlen.

Die Faltenkontur des fertigen Spritzgussteils weist dabei abgerundete Kanten und keinen konstanten Querschnitt auf, da der Kunststoff im Faltenbereich gestreckt wird.

Obwohl die vorliegende Erfindung anhand eines bevorzugten Ausführungsbeispiels und verschiedener Ausführungsformen vorstehend beschrieben wurde, ist sie darauf nicht beschränkt, sondern kann auf vielfältige Weise modifiziert werden.

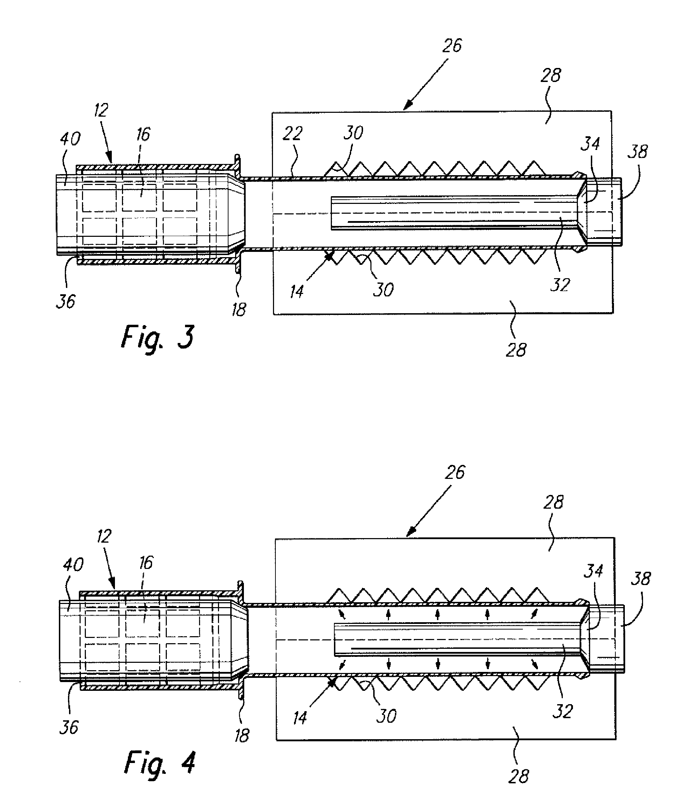

Die vorliegende Erfindung ist insbesondere nicht auf die in dem obigen Ausführungsbeispiel beschriebenen Ausführungsformen und Varianten beschränkt. Insbesondere ist die vorliegende Erfindung nicht auf die Herstellung eines Spritzgussteils beschränkt wie es in den Fig. 1-5 dargestellt ist. Stattdessen können neben Luftführungsteilen, wie Rohre bzw. Reinluftrohre, beliebige andere Spritzgussteile mit einem Faltenbereich hergestellt werden. Der Faltenbereich kann dabei zick-zackförmig und/oder wellenförmig ausgebildet sein.

Die Erfindung ist dabei auch nicht auf die oben beschriebene und dargestellte Ausführung des ersten Abschnitts des Spritzgussteils beschränkt. Der erste "fertige" Abschnitt des Spritzgussteils kann beliebig, je nach Funktion und Einsatzzweck, ausgebildet sein. Der besondere Vorteil der Erfindung liegt darin, dass durch das fertige Spritzgießen des ersten Abschnitts komplexe Geometrien, sowie die Ausformung von Innenkonturen, an diesem Abschnitt ausgebildet werden können. Im Gegensatz dazu sind die Konturen bei rein durch Blasformen gebildeten Teilen nicht so scharf bzw. abgerundet.

Des Weiteren ist die Erfindung nicht darauf beschränkt, dass das Spitzgussteil aus zwei Abschnitten besteht. Grundsätzlich kann das Spritzgussteil beliebig viele Abschnitte aufweisen, wobei wenigstens einer dieser Abschnitte eine Faltenkontur aufweist und wenigstens ein anderer Abschnitt als fertiger Spritzgussabschnitt ausgebildet ist.

## Patentansprüche

1. Verfahren zum Herstellen eines Spritzgussteils bestehend aus wenigstens zwei Abschnitten (12, 14) wobei ein Abschnitt (14) eine Faltenkontur (24) aufweist, mit den folgenden Schritten:
Bereitstellen eines spritzgegossenen Vorformlings (10), wobei der Vorformling (10) wenigstens eine Öffnung (34) aufweist,
Einsetzen des Abschnitts (14) des Vorformlings (10), der mit der Faltenkontur (24) zu versehen ist, in eine Blasform (26), wobei die Blasform (26) auf ihrer Innenseite eine der Faltenkontur entsprechende Negativkontur (30) aufweist,
Einführen einer Heiz- und Blaseinrichtung (32) durch die Öffnung in den Vorformling (10), wobei die Öffnung (34) verschlossen wird,
Erwärmen und Aufblasen zumindest des Abschnitts (14) des Vorformlings (10), der mit der Faltenkontur (24) zu versehen ist, durch die Heiz- und Blaseinrichtung (32), um den Abschnitts des Vorformlings (10) auf die Negativkontur (30) der Blasform aufzubringen,
Entfernen des Spritzgussteils aus der Blasform (26) nachdem dieses abgekühlt ist.

2. Verfahren nach Anspruch 1,
**dadurch gekennzeichnet,**
**dass** der erste und zweite Abschnitt (12, 14) des Vorformlings (10) aus demselben oder einem unterschiedlichen Material hergestellt sind.

3. Verfahren nach Anspruch 1 oder 2,
**dadurch gekennzeichnet,**
**dass** die Blas- und Energieeinrichtung den Abschnitt des Vorformlings über Heißluft und/oder Strahlungswärme erwärmt.

4. Verfahren nach einem der Ansprüche 1 bis 3,
**dadurch gekennzeichnet,**
**dass** die Heiz- und Blaseinrichtung (32) den Abschnitt (14) des Vorformlings (10) durch das Zuführen von Druckluft aufbläst.

5. Verfahren nach Anspruch 4,
**dadurch gekennzeichnet,**
**dass** die Druckluft vorzugsweise Heißluft ist.

6. Verfahren nach einem der Ansprüche 1 bis 5,
**dadurch gekennzeichnet,**
**dass** zumindest die Negativkontur (30) der Blasform (26) eine Antihaftbeschichtung aufweist.

7. Spritzgussteil, welches nach einem Verfahren gemäß einem der Ansprüche 1 bis 6 hergestellt ist.

8. Spritzgussteil nach Anspruch 7,
**dadurch gekennzeichnet,**
**dass** das Spritzgussteil wenigstens zwei Abschnitte (12, 14) aufweist, wobei der eine Abschnitt (14) eine Faltenkontur (24) mittels Blasformen aufweist und der andere Abschnitt (12) spritzgegossen ist.

9. Spritzgussteil nach Anspruch 8,
**dadurch gekennzeichnet,**
**dass** die beiden Abschnitte (12, 14) aus dem gleichen Material oder einem unterschiedlichen Material bestehen.

10. Spitzgussteil nach einem der Ansprüche 7 bis 9,
**dadurch gekennzeichnet,**
**dass** das Spritzgussteil zumindest teilweise oder vollständig aus thermoplastischem Kunststoff besteht, vorzugsweise aus glasfaserverstärktem Kunststoff.

11. Spritzgussteil nach einem der Ansprüche 7 bis 10,
**dadurch gekennzeichnet,**
**dass** das Spritzgussteil ein Luftführungsteil ist, das beispielsweise aus einem Rohr besteht oder ein Rohr aufweist.
